# FASCICULE DE BREVET EUROPEEN

(11) **EP 3 080 498 B1**
(45) Date de publication et mention de la délivrance du brevet: **02.08.2017**
(21) Numéro de dépôt: 14830403.3
(22) Date de dépôt: 11.12.2014
(51) Int. Cl.: F16K 31/04, F02D 9/10, F02D 11/10, H02K 5/26

(54) **CORPS DE VANNE DOTE D'UN LOGEMENT OPTIMISE POUR LA RECEPTION D'UN MOTEUR**
VENTILKÖRPER MIT EINEM OPTIMIERTEN GEHÄUSE ZUR AUFNAHME EINES MOTORS
VALVE BODY COMPRISING A HOUSING OPTIMISED FOR RECEIVING A MOTOR

(30) Priorité: 11.12.2013 FR 1362400
(43) Date de publication de la demande: 19.10.2016
(73) Titulaire: Valeo Systèmes de Contrôle Moteur, 95800 Cergy Saint Christophe (FR)
(72) Inventeur: COLLET, Thomas, F-95800 Cergy (FR); GAUTIER, Sylvain, F-95300 Ennery (FR); SANCHES, Michael, F-94420 Le Plessis-Trevise (FR)
(74) Mandataire: Garcia, Christine
(86) Numéro de dépôt international: PCT/FR2014/053290
(87) Numéro de publication internationale: WO 2015/087010

(56) Documents cités:
- US-A1- 2005 109 315
- US-A1- 2007 069 170
- US-A1- 2007 103 010
- US-A1- 2008 289 442

## Description

L'invention se rapporte à un corps de vanne doté d'un logement optimisé pour la réception d'un moteur. Le terme « vanne » est général et désigne tout type de dispositif destiné à réguler le débit et/ou la pression d'un fluide, notamment un gaz circulant dans un conduit d'une installation ou d'un véhicule.

De façon conventionnelle, une vanne possède un corps et met en oeuvre un organe d'ouverture/fermeture dudit conduit, pouvant par exemple être un volet, ledit volet étant mû par un moteur logé la plupart du temps dans ledit corps.

Habituellement, ce moteur est électrique, et est introduit dans un logement du corps de vanne prévu à cet effet. Il est ensuite translaté dans ce logement jusqu'à ce que son extrémité inférieure parvienne au fond dudit logement. Cette extrémité inférieure est pourvue d'un palier inférieur étroit, destiné à pénétrer dans un évidement central et de dimension réduite du fond du logement. Il est donc particulièrement important de pouvoir guider avec précision la translation du moteur dans le logement, afin que le palier vienne se loger systématiquement dans l'évidement du fond du logement. En effet, le positionnement du moteur dans le corps de vanne, va conditionner le fonctionnement ou non de ladite vanne ainsi que la tenue mécanique en vibration du moteur. US2007/103010 décrit un corps de vanne selon le préambule de la revendication 1. L'invention se rapporte à un corps de vanne doté d'un logement destiné à recevoir un moteur d'actionnement, ledit logement étant conformé pour assurer un guidage précis du moteur, afin que celui-ci vienne se placer de façon systématique dans une position fonctionnelle dans ledit corps.

L'invention a pour objet un corps de vanne doté d'un logement destiné à recevoir un moteur d'actionnement, ledit logement présentant un axe longitudinal et étant délimité par une paroi latérale possédant une surface interne destinée au guidage du moteur, la surface interne comportant au moins une première et une deuxième zones de guidage s'étendant sur au moins une portion de la hauteur du logement, la première zone de guidage présentant, dans un plan comprenant l'axe longitudinal, un premier angle aigu d'inclinaison par rapport à l'axe longitudinal du logement et la deuxième zone de guidage présentant, dans un plan comprenant l'axe longitudinal, un deuxième angle d'inclinaison par rapport à l'axe longitudinal du logement, le premier angle d'inclinaison étant supérieur au deuxième angle d'inclinaison. De cette manière, les zones de guidage sont assimilables à des pistes de faible déclivité, ayant pour but de guider avec précision le moteur d'actionnement, de manière à ce qu'il vienne occuper une position fonctionnelle dans ledit corps. En effet, une extrémité du moteur étant destinée à coopérer avec un relief placé au fond du logement, il est souhaitable de pouvoir assurer cette coopération de façon fiable et systématique, sans avoir à réajuster par petites touches successives, la position du moteur. Préférentiellement, chaque première et chaque deuxième zone s'étendent sur une hauteur du logement comprise entre 75% et 100% de la hauteur totale dudit logement. Le moteur peut, par exemple, être un moteur électrique qui est généralement bien adapté pour actionner un organe d"ouverture ou de fermeture de la vanne.

Le deuxième angle peut être aigu.

Avantageusement, le logement possède une ouverture et un fond, ladite ouverture étant placée à l'extrémité opposée de celle constituée par le fond, la section transversale dudit logement diminuant progressivement de ladite ouverture vers ledit fond, lesdites première et deuxième zones ayant tendance à atténuer cette diminution. Le logement est sensiblement de forme tronconique, les premières et deuxièmes zones contribuant à redresser localement la paroi dudit logement, de manière à diminuer son angle d'inclinaison par rapport à son axe longitudinal.

De façon préférentielle, le premier angle d'inclinaison est compris entre 0,5° et 5°, par exemple entre 1,5° et 4,5°, notamment entre 2° et 3,5°. Selon un mode de réalisation préféré d'un corps de vanne selon l'invention, cet angle est de 3°.

Préférentiellement, le deuxième angle d'inclinaison est compris entre 0° et 3°, par exemple entre 0,5° et 2,5°, notamment entre 1° et 2°. Selon un mode de réalisation préféré d'un corps de vanne selon l'invention, cet angle est de 1,5°.

De tels premier et deuxième angles permettent la fabrication d'un corps de vanne en fonderie sans avoir recours à un usinage spécifique pour le guidage, le deuxième angle permettant l'amélioration du guidage et le premier angle permettant de faciliter le démoulage de la pièce de fonderie lors de la fabrication du corps.

De façon avantageuse, la surface interne du logement est formée par une alternance d'au moins une première et une deuxième zone, l'alternance étant considérée dans un plan orthogonal à l'axe longitudinal. De cette manière, deux zones successives rencontrées le long de la circonférence du logement sont constituées par une première et une deuxième zone.

De façon préférentielle, le logement comprend une succession alternée et continue de premières et de deuxièmes zones.

Préférentiellement, le logement comprend aux moins trois premières et trois deuxièmes zones.

De façon avantageuse, le logement comprend trois premières et trois deuxièmes zones.

L'invention a aussi pour objet un corps de vanne doté d'un logement destiné à recevoir un moteur d'actionnement, ledit logement présentant un fond, le fond s'étendant dans un plan et possédant une cavité sensiblement cylindrique apte à recevoir un palier inférieur dudit moteur, ladite cavité étant délimitée par un bord annulaire chanfreiné émergeant dudit fond, la pente dudit bord faisant un angle compris entre 30° et 45° avec le plan du fond du logement.

Une telle cavité permet un auto-centrage du palier inférieur du moteur dans la cavité lors d'insertion de celui-ci dans le logement du corps de la vanne. Ce guidage permet de faciliter l'opération consistant à monter le moteur dans le corps de la vanne.

L'angle entre la pente du bord chanfreiné et le plan du fond du logement peut être compris entre 35° et 40°. Un tel chanfrein est particulièrement adapté à un auto centrage du palier inférieur. En effet la pente de ce chanfrein permet de créer une forme d'entonnoir qui réduit les frottements et permet, par effet de gravité au moment du montage, que le moteur se positionne sans action particulière dans la cavité.

La dimension h du bord chanfreiné considérée selon un axe longitudinal du logement, peut être comprise entre 1,3mm et 2mm, notamment entre 1,35mm et 1,5mm.

Le rapport entre cette dimension h et la dimension de la cavité considérée suivant le même axe, peut être compris entre 5% et 25%, notamment entre 10% et 15%.

La dimension i du bord chanfreiné considérée selon un axe parallèle au fond du logement peut être comprise entre 1,5mm et 2,5mm, notamment entre 1,7mm et 2mm.

La cavité peut présenter un compartiment principal et un compartiment secondaire, le compartiment principal étant élargi par rapport au compartiment secondaire et étant situé entre le logement et ledit compartiment secondaire. Un tel compartiment principal permet d'assurer un auto-centrage du palier inférieur du moteur tout en étant tolérant par rapport aux imprécisions des pièces et un tel compartiment secondaire permet un bon guidage et un maintien du palier inférieur du moteur, une fois le moteur complètement inséré dans le logement.

Un corps de vanne selon l'invention présente l'avantage de posséder un logement de moteur, doté d'un premier moyen de guidage dudit moteur, constitué par la présence de zones inclinées placées sur la surface interne de la paroi latérale bordant ledit logement. Ledit corps a de plus l'avantage de posséder un logement de moteur, doté d'un deuxième moyen de guidage du moteur, constitué par un fond de forme profilée et destiné à faciliter les conditions de contact entre une extrémité du moteur et un fond dudit logement. Ces deux moyens de guidage permettant de positionner correctement et de façon fiable le moteur dans le corps de la vanne, sont simples et faciles à réaliser. De plus, ils n'engendrent, ni un accroissement de la masse du corps de la vanne, ni un encombrement important dudit corps.

On donne, ci-après, une description détaillée d'un mode de réalisation préféré d'un corps de vanne selon l'invention, en se référant aux figures 1 à 5.
- la figure 1 est une vue en perspective d'un assemblage d'actionnement d'une vanne comprenant un moteur et une plaque de support,
- la figure 2 est une vue en perspective partielle d'un corps de vanne et de l'assemblage d'actionnement de la figure 1, ledit assemblage étant positionné dans ledit corps,
- la figure 3 est une vue en coupe axiale longitudinale d'un logement du corps de la vanne, destiné à recevoir le moteur d'un assemblage d'actionnement,
- la figure 4 est une vue partielle en perspective de l'intérieur du logement de la figure 3, montrant une surface interne dudit logement,
- la figure 5 est une vue partielle en coupe axiale longitudinale du logement de la figure 3,
- la figure 6 est une vue en coupe selon VI-VI de la paroi latérale du logement de la figure 4, et
- la figure 7 est une vue en coupe selon VII-VII de la paroi latérale du logement de la figure 4.

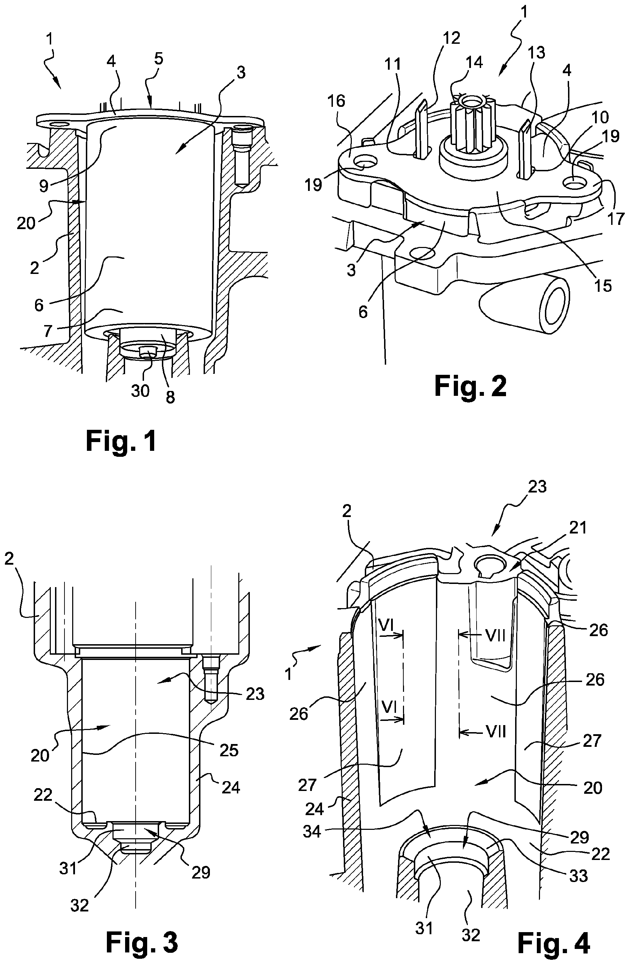

En se référant à la figure 1, une vanne 1 constitue un dispositif destiné à réguler le débit et/ou la pression d'un fluide circulant dans un conduit d'une installation ou d'un véhicule. Une telle vanne 1 possède conventionnellement un corps 2, par exemple réalisé en fonderie et met en oeuvre un organe d'ouverture/fermeture dudit conduit, pouvant par exemple être un volet, ledit volet étant par exemple mû par un moteur 3 électrique logé dans ledit corps 2. Afin d'assurer un positionnement et un maintien du moteur 3 dans le corps 2 de la vanne 1, une plaque 4 de support est fixée audit moteur 3 pour orienter correctement ledit moteur 3 dans ledit corps 2 et le maintenir en position dans le corps 2. Ainsi, la plaque 4 de support est préalablement fixée au moteur 3 pour former un assemblage 5 d'actionnement, ledit assemblage 5 étant ensuite manipulé pour être introduit dans le corps 2 de la vanne pour amener ledit moteur 3 dans une position fonctionnelle au sein de la vanne 1. Le moteur 3 possède un boitier 6 allongé de forme sensiblement cylindrique, et dont l'axe de révolution constitue un axe longitudinal dudit moteur 3. Une extrémité 7 du boitier 6 se termine par un palier inférieur 8, de forme sensiblement cylindrique, et dont le diamètre est inférieur au diamètre dudit boitier 6. Le boitier 6 et le palier inférieur 8 ont leurs axes de révolution confondus. Le palier inférieur 8 est prolongé par un pion 30 cylindrique dont le diamètre est inférieur à celui dudit palier 8, le palier 8 et le pion 30 étant coaxiaux. L'autre extrémité opposée 9 de ce boitier 6, est obturée par la plaque 4 de support. Cette plaque 4 est plane et est orientée sur le boitier 6 de manière à ce que son plan soit perpendiculaire à l'axe de révolution dudit boitier 6. Cette plaque 4 possède des dimensions qui sont supérieures à la section transversale du boitier 6, si bien que ladite plaque 4 déborde latéralement dudit boitier 6.

En se référant à la figure 2, la plaque 4 comporte deux ouvertures 10,11 pour laisser émerger deux tiges 12,13 représentant les deux pôles électriques du moteur 3, ladite plaque étant également traversée par un arbre d'entrainement 14 dudit moteur 3. Les deux tiges 12,13 ainsi que ledit arbre 14 sont parallèles à l'axe de révolution du boitier 6, et émergent donc perpendiculairement de la plaque 4 de support. La plaque 4 possède un corps central 15 de forme sensiblement circulaire et deux languettes 16,17 de positionnement prolongeant ledit corps central 15. Le corps central 15 et les deux languettes 16,17 de positionnement constituent une seule pièce, qui est globalement plane et d'épaisseur constante. Les deux languettes 16,17 constituent deux excroissances du corps central 15, qui sont décalées angulairement dans le plan de la plaque 4. Ces deux languettes 16,17 font entre elles un angle inférieur à 180° et supérieur à 150°, et se terminent chacune par une portion en arc de cercle. Ces deux languettes 16,17 sont percées chacune d'un trou 19 pour permettre le passage d'une vis de fixation et ainsi arrimer l'assemblage 5 d'actionnement dans le corps 2 de la vanne 1, notamment dans un trou de vis pratiqué dans le corps 2.

En se référant aux figures 1, 2, 3 et 4, le corps 2 de la vanne 1 comprend un logement 20 et un évidement 21 pour recevoir la plaque de support 4 de l'assemblage d'actionnement 5 et les vis destinées à arrimer l'assemblage 5, chaque vis traversant un trou 19. L'évidement 21 est réalisé par usinage du corps 2. Le logement 20 possède une géométrie globalement tronconique, dont une première extrémité 22 constitue un fond plan dudit logement 20 et dont une deuxième extrémité 23 constitue une ouverture dudit logement 20 et est prolongée par l'évidement 21. L'évidement 21 a un contour qui est sensiblement analogue au contour de la plaque 4, si bien que la plaque 4 ne peut venir se loger dans ledit évidement 21 que dans une seule position. La portion du corps 2 de la vanne 1 dans laquelle ont été usinés l'évidement 21 et le logement 20 est en fonderie.

En se référant aux figures 3 et 4, le logement 20 possède un axe longitudinal, et est délimité par une paroi latérale 24 en fonderie présentant une surface interne 25 de forme généralement tronconique, et définissant un angle d'inclinaison avec l'axe longitudinal du logement 20.

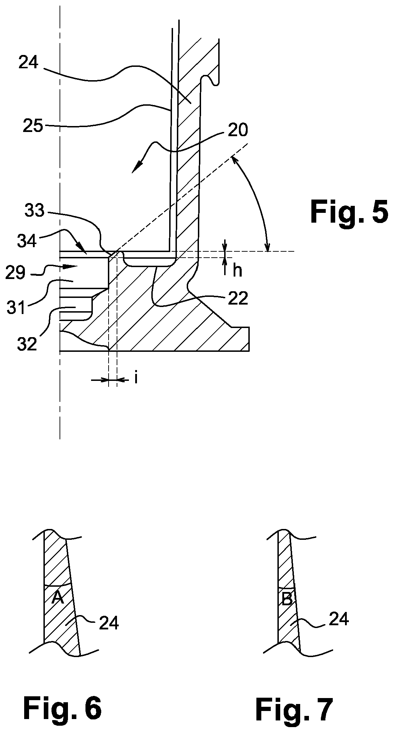

En se référant à la figure 4, cette surface interne 25 comporte par exemple trois premières zones 26 par exemple identiques et sensiblement rectangulaires, s'étendant sur toute la hauteur du logement 20. Chacune de ces premières zones 26 présente dans un plan comprenant l'axe longitudinal, un premier angle d'inclinaison A de 3°, par rapport à l'axe longitudinal du logement 20, comme illustré sur la figure 6. La surface interne 25 dudit logement 20 comporte par ailleurs deux deuxièmes zones 27 par exemple identiques et sensiblement rectangulaires, s'étendant sur toute la hauteur du logement 20. Chacune de ces deuxièmes zones 27 présente dans un plan comprenant l'axe longitudinal, un deuxième angle d'inclinaison B de 1,5°, par rapport à l'axe longitudinal du logement 20, comme illustré sur la figure 7. Le deuxième angle d'inclinaison est orienté de telle sorte que les deuxièmes 27 zones contribuent à atténuer l'angle d'inclinaison du logement 20 de manière à tendre vers une configuration cylindrique. Les premières 26 et les deuxièmes 27 zones sont disposées en alternance sur la surface interne 25 du logement, le long de la circonférence dudit logement 20.

En se référant aux figures 3, 4 et 5, le fond 22 du logement est plan et présente une cavité centrale 29 comportant un compartiment principal 31 cylindrique, prolongé par un compartiment secondaire 32 cylindrique dont le diamètre est inférieur à celui du compartiment principal 31. Le compartiment principal 31 et le compartiment secondaire 32 ont leurs axes de révolution confondus, lesdits axes étant parallèles à l'axe longitudinal du logement 20. Le compartiment principal 31 est situé entre le logement 20 et le compartiment secondaire 32 et est en communication avec ledit logement 20 et ledit compartiment secondaire 32. De cette manière, le compartiment secondaire 32 matérialise le fond de la cavité 29. Le compartiment principal 31 est destiné à recevoir le palier inférieur 8 du moteur 3, et le compartiment secondaire 32 est destiné à recevoir le pion 30 émergeant dudit palier secondaire 8.

En se référant à la figure 4, le compartiment principal 31 est délimité par un bord annulaire 33 saillant du fond 22 du logement 20, ledit bord 33 délimitant un espace d'entrée 34 du compartiment principal 31. Cet espace d'entrée 34 est donc compris entre le logement 20 et le compartiment principal 31 de la cavité 29. Le bord annulaire 33 est chanfreiné de façon à ce que l'espace d'entrée 34 soit de forme tronconique, la partie évasée dudit espace d'entrée 34 étant située du coté du logement 20 et la partie la plus rétrécie dudit espace 34 étant située du coté du compartiment principal 31. La pente du bord chanfreiné 33 fait un angle compris entre 30° et 45° avec le plan du fond 22 du logement 20. Préférentiellement, cet angle est compris entre 35° et 40°. La dimension h du bord chanfreiné considérée selon un axe longitudinal du logement 20, est comprise entre 1,3mm et 2mm. Préférentiellement, cette dimension h est comprise entre 1,35mm et 1,5mm. Le rapport entre cette dimension h et la dimension de la cavité 29 considérée suivant le même axe, est compris entre 5% et 25%, et préférentiellement entre 10% et 15%. La dimension i du bord chanfreiné 33 considérée selon un axe parallèle au fond 22 du logement 20, ledit axe étant perpendiculaire à l'axe longitudinal dudit logement 20, est comprise entre 1,5mm et 2,5mm. Préférentiellement, cette dimension est comprise entre 1,7mm et 2mm.

Un procédé de montage d'un moteur 3 dans un corps 2 de vanne 1 selon l'invention, comprend les étapes suivantes :
- une étape de fixation de la plaque 4 de support à une extrémité du moteur 3 pour obtenir un assemblage d'actionnement 5,
- une étape d'insertion dudit assemblage 5 dans le corps 2 de la vanne 1 au moyen d'une introduction du moteur 3 dans le logement 20,
- une étape de coulissement du moteur 3 dans le logement 20 au moyen d'un guidage précis réalisé avec les premières 26 et les deuxièmes 27 zones dudit logement 20,
- une étape d'insertion du palier inférieur 8 dans la cavité 29 située au fond 22 du logement 20, cette insertion étant facilitée par le bord chanfreiné 33 saillant dudit fond 22 et délimitant ladite cavité 29, l'étape d'insertion s'accompagnant du coulissement de l'assemblage d'actionnement 5 dans le logement 20, jusqu'à ce que la plaque 4 de support parvienne au niveau de l'évidement 21,
- une étape de fixation dans le corps 2 de la vanne 1, de l'assemblage d'actionnement 5 dans une position fonctionnelle, au moyen de deux vis traversant les trous 19 de la plaque 4 de support.

## Revendications

1. Corps (2) de vanne (1) doté d'un logement (20) destiné à recevoir un moteur (3) d'actionnement, ledit logement (20) présentant un axe longitudinal et étant délimité par une paroi latérale (24) possédant une surface interne (25) destinée au guidage du moteur (3), la surface interne (25) comportant au moins une première (26) et une deuxième (27) zones de guidage s'étendant sur au moins une portion de la hauteur du logement (20), la première zone (26) de guidage présentant, dans un plan comprenant l'axe longitudinal, un premier angle (A) aigu d'inclinaison par rapport à l'axe longitudinal du logement (20) et la surface interne (25) étant formée par une alternance d'au moins une première (26) et une deuxième (27) zones, l'alternance étant considérée dans un plan orthogonal à l'axe longitudinal, le corps (2) étant **caractérisé en ce que** la deuxième zone (61, 62) de guidage présente, dans un plan comprenant l'axe longitudinal, un deuxième angle d'inclinaison par rapport à l'axe longitudinal du logement (56), le premier angle (A) d'inclinaison étant supérieur au deuxième angle (B) d'inclinaison.

2. Corps selon la revendication 1, dans lequel le logement (20) possède une ouverture (23) et un fond (22), ladite ouverture (23) étant placée à l'extrémité opposée de celle constituée par le fond (22), la section transversale dudit logement diminuant progressivement de ladite ouverture (23) vers ledit fond (22).

3. Corps selon l'une quelconque des revendications 1 ou 2, dans lequel le deuxième angle (B) est aigu.

4. Corps selon l'une quelconque des revendications 1 à 3, dans lequel le premier angle d'inclinaison (A) est compris entre 0,5° et 5°, par exemple entre 1,5° et 4,5°, notamment entre 2° et 3,5°.

5. Corps selon l'une quelconque des revendications 1 à 3, dans lequel le deuxième angle (B) d'inclinaison est compris entre 0° et 3°, par exemple entre 0,5° et 2,5°, notamment entre 1° et 2°.

6. Corps selon l'une quelconque des revendications 1 à 4, dans lequel la surface interne (25) du logement (20) est formée par une alternance de la première (26) zone et de la deuxième (27) zone, le long de la circonférence de la surface interne (25).

7. Corps selon la revendication 6, dans lequel le logement (20) comprend une succession alternée et continue de premières (26) et de deuxièmes (27) zones.

8. Corps selon l'une quelconque des revendications 6 ou 7, dans lequel le logement (20) comprend aux moins trois premières (26) et trois deuxièmes (27) zones, notamment trois premières (26) et trois deuxièmes (27) zones alternées.

## Patentansprüche

1. Körper (2) eines Ventils (1), der mit einem Gehäuse (20) versehen ist, das dazu bestimmt ist, einen Antriebsmotor (3) aufzunehmen, wobei das Gehäuse (20) eine Längsachse aufweist und von einer Seitenwand (24) begrenzt wird, die eine zur Führung des Motors (3) bestimmte Innenfläche (25) besitzt, wobei die Innenfläche (25) wenigstens einen ersten (26) und einen zweiten (27) Führungsbereich aufweist, die sich über wenigstens einen Abschnitt der Höhe des Gehäuses (20) erstrecken, wobei der erste Führungsbereich (26) in einer die Längsachse umfassenden Ebene einen spitzen ersten Neigungswinkel (A) bezüglich der Längsachse des Gehäuses (20) aufweist und die Innenfläche (25) von einer wechselnden Folge wenigstens eines ersten (26) und eines zweiten (27) Bereichs gebildet wird, wobei die wechselnde Folge in einer zur Längsachse senkrechten Ebene betrachtet wird, wobei der Körper (2) **dadurch gekennzeichnet ist, dass** der zweite Führungsbereich (61, 62) in einer die Längsachse umfassenden Ebene einen zweiten Neigungswinkel bezüglich der Längsachse des Gehäuses (56) aufweist, wobei der erste Neigungswinkel (A) größer als der zweite Neigungswinkel (B) ist.

2. Körper nach Anspruch 1, wobei das Gehäuse (20) eine Öffnung (23) und einen Boden (22) besitzt, wobei die Öffnung (23) an dem Ende angeordnet ist, das dem aus dem Boden (22) bestehenden Ende gegenüberliegt, wobei sich der Querschnitt des Gehäuses von der Öffnung (23) zum Boden (22) hin allmählich verringert.

3. Körper nach einem der Ansprüche 1 oder 2, wobei der zweite Winkel (B) spitz ist.

4. Körper nach einem der Ansprüche 1 bis 3, wobei der erste Neigungswinkel (A) zwischen 0,5° und 5° beträgt, zum Beispiel zwischen 1,5° und 4,5°, insbesondere zwischen 2° und 3,5°.

5. Körper nach einem der Ansprüche 1 bis 3, wobei der zweite Neigungswinkel (B) zwischen 0° und 3° beträgt, zum Beispiel zwischen 0,5° und 2,5°, insbesondere zwischen 1° und 2°.

6. Körper nach einem der Ansprüche 1 bis 4, wobei die Innenfläche (25) des Gehäuses (20) von einer wechselnden Folge aus ersten (26) Bereichen und zweiten (27) Bereichen entlang des Umfangs der Innenfläche (25) gebildet wird.

7. Körper nach Anspruch 6, wobei das Gehäuse (20) eine wechselnde und kontinuierliche Aufeinanderfolge von ersten (26) und von zweiten (27) Bereichen umfasst.

8. Körper nach einem der Ansprüche 6 oder 7, wobei das Gehäuse (20) wenigstens drei erste (26) und drei zweite (27) Bereiche, insbesondere drei erste (26) und drei zweite (27) Bereiche, die einander abwechseln, umfasst.

## Claims

1. Body (2) for a valve (1), comprising a housing (20) designed to receive an actuating motor (3), said housing (20) having a longitudinal axis and being bounded by a lateral wall (24) having an inner surface (25) designed to guide the motor (3), the inner surface (25) comprising at least one first guiding zone (26) and one second guiding zone (27) which extend over at least a portion of the height of the housing (20), the first guiding zone (26) having, in a plane that includes the longitudinal axis, a first acute angle (A) of inclination with respect to the longitudinal axis of the housing (20), and
the inner surface (25) consisting of an alternation of at least one first zone (26) and one second zone (27), this alternation being in a plane orthogonal to the longitudinal axis, the body (2) being **characterized in that** the second guiding zone (61, 62) has, in a plane that includes the longitudinal axis, a second angle of inclination with respect to the longitudinal axis of the housing (56), the first angle of inclination (A) being greater than the second angle of inclination (B).

2. Body according to Claim 1, in which the housing (20) has an opening (23) and a base (22), said opening (23) being positioned at the opposite end from the base (22), wherein the cross section of said housing diminishes progressively from said opening (23) towards said base (22).

3. Body according to either one of Claims 1 and 2, in which the second angle (B) is acute.

4. Body according to any one of Claims 1 to 3, in which the first inclination angle (A) is between 0.5° and 5°, for example between 1.5° and 4.5°, in particular between 2° and 3.5°.

5. Body according to any one of Claims 1 to 3, in which the second inclination angle (B) is between 0° and 3°, for example between 0.5° and 2.5°, in particular between 1° and 2°.

6. Body according to any one of Claims 1 to 4, in which the inner surface (25) of the housing (20) consists of an alternation of the first zone (26) and the second zone (27), around the circumference of the inner surface (25).

7. Body according to Claim 6, in which the housing (20) comprises an alternating and continuous succession of first zones (26) and second zones (27).

8. Body according to either one of Claims 6 and 7, in which the housing (20) comprises at least three first zones (26) and three second zones (27), in particular three first zones (26) and three second zones (27) alternately.
